# EUROPEAN PATENT SPECIFICATION

(11) **EP 3 922 498 B1**
(45) Date of publication and mention of the grant of the patent: **31.08.2022**
(21) Application number: 20179478.1
(22) Date of filing: 11.06.2020
(51) Int. Cl.: B60K 11/02, B60K 6/20, F01P 11/02

(54) **AN EXPANSION TANK FOR A VEHICLE WITH DUAL COOLING LINES, A COOLANT SYSTEM AND A METHOD FOR FILLING THE EXPANSION TANK**
AUSDEHNUNGSGEFÄSS FÜR EIN FAHRZEUG MIT DOPPELTEN KÜHLLEITUNGEN, KÜHLMITTELSYSTEM UND VERFAHREN ZUM FÜLLEN DES AUSDEHNUNGSGEFÄSSES
RÉSERVOIR DE DÉTENTE POUR UN VÉHICULE AVEC DEUX LIGNES DE REFROIDISSEMENT, SYSTÈME DE REFROIDISSEMENT ET PROCÉDÉ DE REMPLISSAGE DE RÉSERVOIR DE DÉTENTE

(43) Date of publication of application: 15.12.2021
(73) Proprietor: Ningbo Geely Automobile Research & Development Co. Ltd., Hangzhou Bay New District Ningbo 315336 (CN); Zhejiang Geely Holding Group Co., Ltd., Zhejiang 310051 (CN)
(72) Inventor: BUVARP, Daniel, 514 54 GÖTEBORG (SE); SOYDAN, Faruk, 417 19 GÖTEBORG (SE)
(74) Representative: Zacco Sweden AB

(56) References cited:
- WO-A1-2019/203701
- DE-A1-102017 004 632
- KR-A- 20120 033 588
- SE-A1- 1 551 177
- US-A1- 2013 220 719

## Description

### Technical field

The present invention relates to an expansion tank for a vehicle with dual cooling lines, a coolant system for electric circuits in a vehicle with an electric drive line and a method for filling the expansion tank. More specifically, the invention relates to an expansion tank for a vehicle with dual cooling lines, a coolant system for electric circuits in a vehicle with an electric drive line and a method for filling the expansion tank as defined in the introductory parts of claim 1, claim 12 and claim 16.

### Background art

Vehicles have traditionally mostly been powered by Internal Combustion Engines (ICE). Such vehicles have been equipped with a cooling system to regulate the temperature of the ICE and to avoid over-heating the engine. These cooling systems are normally liquid cooling lines connected to an expansion tank for allowing thermal expansion of the liquid and a circulation pump driving the liquid in the system.

In modern vehicles it is more and more common to have multiple drive lines where one is electrical. Electrical drive lines often require large batteries and /or high voltage batteries that at times need to deliver high power to the electric engine. The battery therefore also needs a liquid cooling system, which system requires a pump and an expansion tank.

It is not possible to use the same liquid cooling system as for the engine since the systems normally operates under different internal pressure for design reasons. Two cooling lines, two liquid circulation pumps, and two expansion tanks are thereby needed for hybrid vehicles leading to a large number of components and a more complicated design and assembly. This presents a problem as space is limited in vehicles in general and in vehicles with multiple driving lines in particular.

There is thus a need for improved solutions for engine and battery cooling in hybrid vehicles. KR 2012 0033588 discloses an expansion tank for a vehicle with dual cooling lines, comprising a first chamber, wherein the expansion tank comprises a first fluid connector in fluid connection with the first chamber for connection to a first cooling line,a second chamber, wherein the expansion tank comprises a second fluid connector in fluid connection with the second chamber for connection to a second cooling line,wherein the first chamber and the second chamber are in fluid connection via a valve.

### Summary

It is an object of the present invention to mitigate, alleviate or eliminate one or more of the above-identified deficiencies and disadvantages in the prior art and solve at least the above mentioned problem. According to a first aspect there is provided an expansion tank for a vehicle with dual cooling lines, comprising a first chamber with a first fluid pressure, wherein the expansion tank comprises a first fluid connector in fluid connection with the first chamber for connection to a first cooling line, a second chamber with a second fluid pressure, wherein the expansion tank comprises a second fluid connector in fluid connection with the second chamber for connection to a second cooling line, wherein the first chamber and the second chamber are in fluid connection via a pressure actuated two-way valve that acts as a one-way valve open in the direction towards the second chamber at differential pressures between the second flud pressure and the first fluid pressure below a first predetermined differential pressure threshold and opens also in the direction towards the first chamber at differential pressures above the first predetermined differential pressure threshold.

An advantage with the expansion tank is that a single expansion tank can be used for two different fluid cooling lines with different pressures in each of the two cooling lines. This saves space in the vehicles where two cooling lines are required. If the liquid in the high pressure second chamber expands it will be able to expand into the first chamber, if the pressure is above the first predetermined differential pressure threshold.

According to some embodiments, the expansion tank comprises an internal division wall between the first chamber and the second chamber, wherein the internal division wall has a first side surface and a second side surface opposite the first side surface, wherein the first side surface delimits the first chamber and the second side surface delimits the second chamber.

An advantage with this embodiment is that the two chambers are located adjacent each other minimizing the size of the expansion tank and the space needed to fit it in a vehicle.

According to some embodiments, the internal division wall comprises an opening forming a fluid connection between the first chamber and the second chamber and wherein the pressure actuated two-way valve is arranged in the opening, thus avoiding other fluid communication means between the two chambers as pipes or hoses.

According to some embodiments, the first container further comprises a filling cap for filling the expansion tank with fluid. As the pressure actuated two-way valve will facilitate communication of fluid between the first chamber and the second chamber, only one filling cap is required, placed on the first chamber, further saving space in the vehicle.

According to some embodiments, the filling cap further comprises an over pressure valve opening towards the environment for releasing fluid at differential pressures between the first fluid pressure in the first container and the ambient air pressure above a second predetermined differential pressure threshold pressure. In normal cases it will only be air that is released through the over pressure valve. However, if the pressure raises above the second differential pressure threshold, e.g. if the liquid becomes too hot and thereby expands more than the available volume in the first cooling line, the pressure and liquid will be released through the over pressure valve. The cooling system is then protected from dangerously high pressures.

According to some embodiments, the first predetermined differential pressure threshold is in the range of 0.2 bar to 3 bar above atmospheric pressure preferably around 0.7 bar. The exact first predetermined differential pressure threshold for the system is set by the individual desired pressure for each of the two cooling lines, which is determined by the type of driving lines in the vehicle.

According to some embodiments, the second predetermined differential pressure threshold is in the range of 0 bar to 1.5 bar, preferably around 0.75 bar. The exact second predetermined differential pressure threshold for the system is set by the desired pressure for each of the first cooling line.

According to some embodiments, the expansion tank further comprises a third fluid connector in fluid connection with the first chamber for connection to the first cooling line, wherein the first fluid connector and the third fluid connector act as inlet and outlet, respectively, for cooling fluid, or the other way around.

According to some embodiments, expansion tank further comprises a fourth fluid connector in fluid connection with the second chamber for connection to the second cooling line, wherein the second fluid connector and the fourth fluid connector act as inlet and outlet, respectively, for cooling fluid, or the other way around.

An advantage with the third and fourth fluid connectors is that the cooling liquid can flow through the first and second chamber of the expansion tank, respectively, which makes gas retraction of any gas in the system easier.

According to a second aspect there is provided a coolant system for electric circuits in a vehicle with an electric drive line comprising an expansion tank according to the first aspect, the coolant system further comprising: a first cooling line for cooling a battery and a second cooling line for cooling a motor, wherein the first cooling line is connected to the first fluid connector of the expansion tank and the second cooling line is connected to the second fluid connector of the expansion tank. The coolant system may e.g. be installed in a hybrid vehicle with two different drive lines or a vehicle with one drive line but that require one cooling line for the battery and one cooling line for the engine.

According to some embodiments, the fluid that is filled into the expansion tank is water with an optional anti-freezing component as water is a good heat exchanging liquid without being expensive. Other coolant liquids may be used if higher efficiency is needed.

According to some embodiments, the motor is an Internal Combustion Engine. Internal Combustion Engines are convenient as they run on liquid fuels with extremely high energy density. According to some embodiments, the motor is an electric motor, which has the advantage of not emitting anything but heat during operation which may be desired for environmental reasons.

According to a third aspect there is provided a method for filling the expansion tank according to the first aspect or the coolant system according to the second aspect, the method comprising the steps of evacuating the expansion tank creating a low pressure or vacuum forcing the pressure actuated two-way valve to open, filling the expansion tank with the liquid during low pressure.

By using a low pressure during filling, the pressure actuated two-way valve of the expansion tank will open and both the first cooling line and the second cooling line may be filled at the same time through the filling cap of the first chamber of the expansion tank.

Effects and features of the second and third aspects are to a large extent analogous to those described above in connection with the first aspect. Embodiments mentioned in relation to the first aspect are largely compatible with the the second and third aspects.

The present invention will become apparent from the detailed description given below. The detailed description and specific examples disclose preferred embodiments of the invention by way of illustration only. Those skilled in the art understand from guidance in the detailed description that changes and modifications may be made within the scope of the invention as defined by the appended claims.

Hence, it is to be understood that the herein disclosed invention is not limited to the particular component parts of the device described or steps of the methods described since such device and method may vary. It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context explicitly dictates otherwise. Thus, for example, reference to "a unit" or "the unit" may include several devices, and the like. Furthermore, the words "comprising", "including", "containing" and similar wordings does not exclude other elements or steps.

### Brief descriptions of the drawings

The above objects, as well as additional objects, features and advantages of the present invention, will be more fully appreciated by reference to the following illustrative and non-limiting detailed description of example embodiments of the present invention, when taken in conjunction with the accompanying drawings.
Figure 1 illustrates two expansion tanks as common in the prior art for vehicle systems having need of two cooling lines.
Figure 2 shows a schematic view of an expansion tank according to an embodiment of the present invention.
Figure 3a shows a possible embodiment of a pressure actuated two-way valve used in the present invention.
Figure 3b shows the pressure actuated two-way valve of Figure 3a when pressure P1 is greater than the pressure P2.
Figure 3c shows the pressure actuated two-way valve of Figure 3a when pressure P1 is less than the pressure P2.
Figure 4 shows an shows an expansion tank according to a further embodiment of the present invention.
Figure 5 shows a coolant system for electric circuits in a vehicle according to an embodiment of the present invention.
Figure 6 shows a coolant system for electric circuits in a vehicle according to a further embodiment of the present invention.
Figure 7 shows a flow chart of a method according to an embodiment of the present invention.

### Detailed description

The present invention will now be described with reference to the accompanying drawings, in which preferred example embodiments of the invention are shown. The invention may, however, be embodied in other forms and should not be construed as limited to the herein disclosed embodiments. The disclosed embodiments are provided to fully convey the scope of the invention as defined by the appended claims to the skilled person.

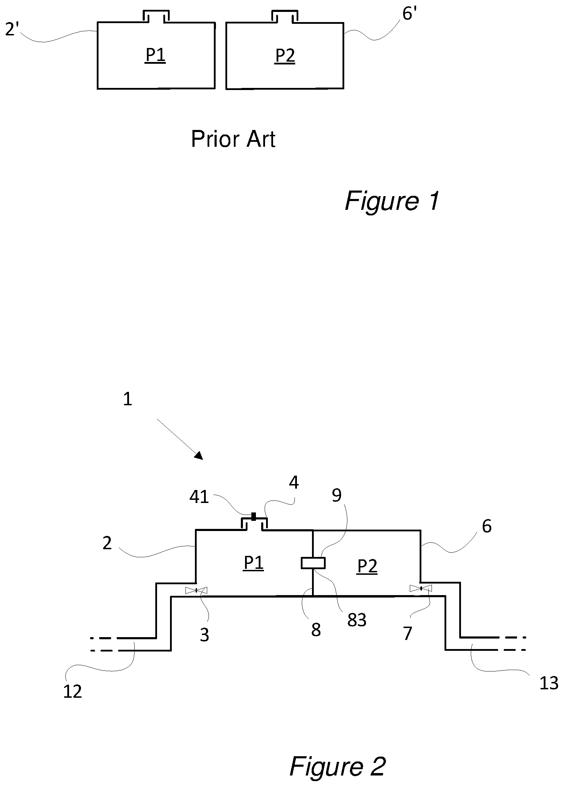

Figure 1 shows two expansion tanks 2', 6' for cooling lines according to prior art systems for vehicles in need of more than one cooling line. Each cooling line (not shown) traditionally has its own expansion tank 2', 6' with a filling cap, especially if the cooling lines require different internal operating pressures. However it is, for reasons specified in the background section of this document, a number of drawback with two separate expansion tanks in vehicles. It is an object of this invention to provide an improved expansion tank for vehicles in need of more than one cooling line.

With reference to Figure 2, the first aspect of this invention will now be described. An expansion tank 1 for a vehicle with dual cooling lines 12,13 is shown. The expansion tank comprises a first chamber 2 with a first fluid pressure P1 and the expansion tank 1 comprises a first fluid connector 3 in fluid connection with the first chamber 2 for connection to a first cooling line 12. The expansion tank further comprises a second chamber 6 with a second fluid pressure P2 and the expansion tank 1 comprises a second fluid connector 7 in fluid connection with the second chamber 2 for connection to a second cooling line 13.The first chamber 2 and the second chamber 6 are in fluid connection with each other via a pressure actuated two-way valve 9 that acts as a one-way valve open in the direction towards the second chamber 6 at differential pressures between the second flud pressure P2 and the first fluid pressure P1 below a first predetermined differential pressure threshold DP1 and opens also in the direction towards the first chamber 2 at differential pressures above the first predetermined differential pressure threshold PD1.

The expansion tank 1 comprises an internal division wall 8 between the first chamber 2 and the second chamber 6, wherein the internal division wall 8 has a first side surface 81 and a second side surface 82 opposite the first side surface, wherein the first side surface delimits the first chamber and the second side surface delimits the second chamber.

The internal division wall 8 comprises an opening 83 forming a fluid connection between the first chamber and the second chamber and wherein the pressure actuated two-way valve 9 is arranged in the opening.

As the liquid in the first cooling line 12 or the second cooling line 13 expands, it will be able to expand in the first chamber 2 and the second chamber 6, respectively via the first fluid connector 3 and the second fluid connector 7, respectively. Above the first predetermined differential pressure threshold DP1, i.e. when the pressure P2 in the second chamber 6 is relatively higher than the pressure P1 in the first chamber by a certain amount, the pressure actuated valve 9 will open so that liquid from the second chamber can enter the first chamber 2. The first fluid connector 3 and the second fluid connector 7 are in Figure 2 indicated to be valves that can be closed. However, the connectors do not need to be a closeable valve. It could also be a nozzle or any other suitable connector for attaching a cooling line.

The expansion tank can be used for two different fluid cooling lines with different pressures in the two cooling lines saving space in the vehicle. If the liquid in the high pressure second chamber expands it will be able to expand into the first chamber.

The first predetermined differential pressure threshold DP1 is in the range of 0.2 bar to 3 bar above atmospheric pressure. The exact setting for the pressure actuated two-way valve 9 is determined by the type of vehicle and the components that are to be temperature controlled by the first cooling line 12 and the second cooling line 13, respectively. The first predetermined differential pressure threshold DP1 is in preferred embodiment around 0.7 bar.

The first chamber 2 further comprises a filling cap 4 for filling the expansion tank 1 with fluid 5. The filling cap 4 further comprises an over pressure valve 41 opening towards the environment for releasing fluid at differential pressures between the first fluid pressure P1 in the first container 2 and the ambient air pressure AP above a second predetermined differential pressure threshold pressure DP2. If the first cooling line 12 and the first chamber 2 for some reason reaches a dangerous over pressure, the over pressure valve 41 will open and let fluid in the second chamber out. The second predetermined differential pressure threshold DP2 is in the range of 0 bar to 1.5 bar depending on the desired operating pressure of the first cooling line 12.

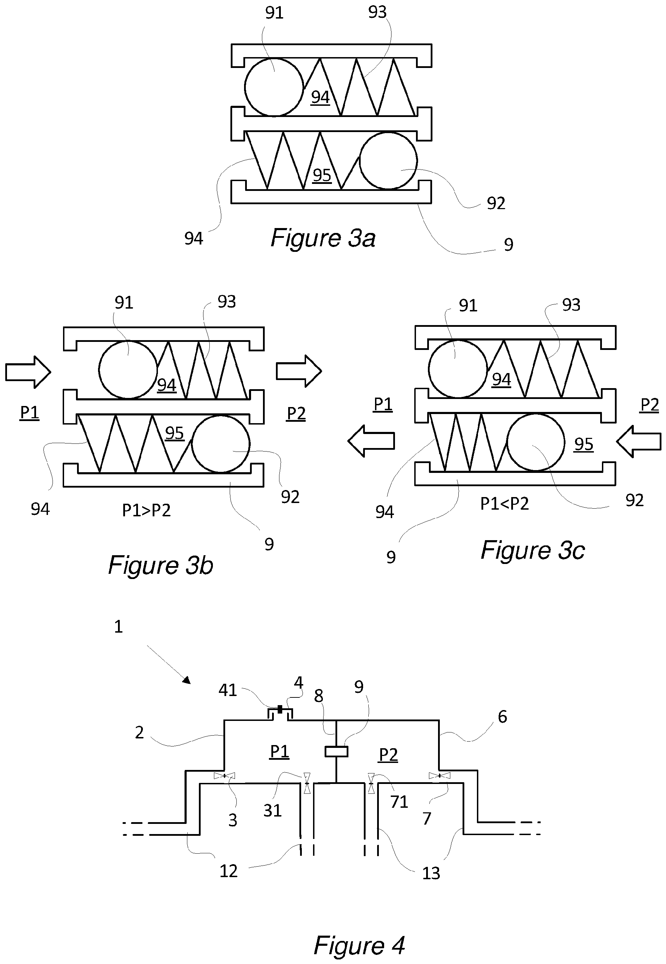

Figure 3a shows a possible embodiment of the pressure actuated two-way valve used in the present invention. The upper channel 94 contains a ball 91 and a spring 93. The lower channel 95 contains a ball 92 and a spring 94. In Figure 3a the valve is closed in both directions as it is when the pressure is low on both sides of the valve.

Figure 3b shows the same example pressure actuated two-way valve as in Figure 3a when pressure P1 is greater than the pressure P2 and the valve is open in the direction of the second chamber 6. The pressure P1 in the first chamber 2 has overcome the spring force of the spring 93 so that the ball 91 has moved and opened the valve section 94. The arrows indicate the flow direction through the pressure actuated two-way valve 9.

Figure 3c shows the pressure actuated two-way valve of Figure 3a when pressure P1 is less than the pressure P2, but above the first predetermined differential pressure threshold DP1, so that the pressure actuated two-way valve 9 is open towards the first chamber 2 of the expansion tank 1. The pressure P2 in the second chamber 6 has overcome the spring force of the spring 94 so that the ball 92 has moved and opened the valve section 95. The arrows indicate the flow direction through the pressure actuated two-way valve 9.

Referring to Figure 4, an embodiment is shown where the expansion tank 1 further comprises a third fluid connector 31 in fluid connection with the first chamber 2 for connection to the first cooling line 12. The first fluid connector 3 and the third fluid connector 31 act as inlet and outlet, respectively, for cooling fluid, or the other way around. The expansion tank 1 further comprises a fourth fluid connector 71 in fluid connection with the second chamber 2 for connection to the second cooling line 12. The second fluid connector 7 and the fourth fluid connector 71 act as inlet and outlet, respectively, for cooling fluid, or the other way around. The chambers of the respective cooling lines are then in included in the fluid flow pass which help getting rid of any gas trapped that may be trapped in the cooling lines.

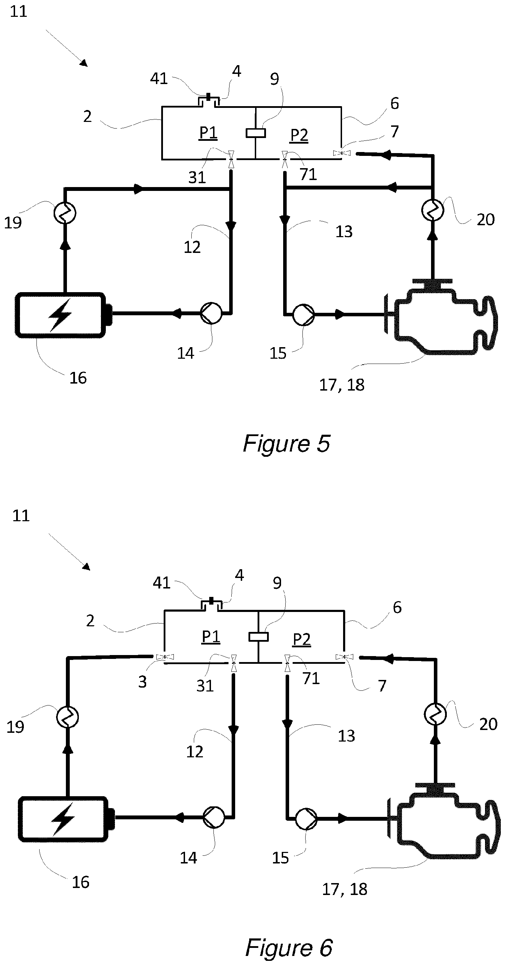

The second aspect of this invention is shown in Figure 5 and discloses a coolant system 11 for electric circuits in a vehicle with an electric drive line comprising an expansion tank 1 according to the first aspect. Further to the components of the expansion tank of the first aspect, the system comprises a first cooling line 12 for cooling a battery 16 and a second cooling line 13 for cooling a motor 17,18. The first cooling line 12 is connected to the first fluid connector 31 of the expansion tank 1 and the second cooling line 13 is connected in parallel to the expansion tank 1 via the connectors 7 and 71. The first cooling line 12 further comprises a first circulation pump 14 for circulating the fluid in the first cooling line. The first cooling line also comprises a heat exchanger 19 for reducing the temperature in the first cooling line. The second cooling line 13 further comprises a second circulation pump 15 for circulating the fluid in the second cooling line 13. The second cooling line also comprises a heat exchanger 20 for reducing the temperature in the second cooling line. The fluid in the first cooling line 12 and the fluid in the second fluid line may thus expand in the first chamber 2 and the second chamber 6, respectively, of the expansion tank 1.

A further embodiment of the second aspect of this invention is shown in Figure 6. A coolant system 11 for electric circuits in a vehicle with an electric drive line is disclosed comprising an expansion tank 1 according to the first aspect. Further to the components of the expansion tank of the first aspect, the system comprises a first cooling line 12 for cooling a battery 16 and a second cooling line 13 for cooling a motor 17,18. The first cooling line 12 is connected to the first fluid connector 3 of the expansion tank 1 and the second cooling line 13 is connected to the second fluid connector 7 of the expansion tank 1. The first cooling line 12 further comprises a first circulation pump 14 for circulating the fluid in the first cooling line. The first cooling line also comprises a heat exchanger 19 for reducing the temperature in the first cooling line. The second cooling line 13 further comprises a second circulation pump 15 for circulating the fluid in the second cooling line 15. The second cooling line also comprises a heat exchanger 20 for reducing the temperature in the second cooling line. The fluid that is filled into the expansion tank 1 is water with an optional anti-freezing component.

The vehicle having the system of the second aspect installed may have a motor 17 that is an Internal Combustion Engine but it may also have an electric motor 18. The vehicle may also be a hybrid vehicle with dual engines and a large battery, where both engines and the battery may need liquid cooling. In some embodiments one cooling line may be used for cooling two different components as e.g. an electric engine and high voltage battery.

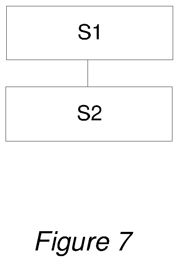

The third aspect of this invention shows a method for filling the expansion tank the first aspect or the coolant system 11 according to the second aspect. With reference to Figure 7 the method comprises the steps of evacuating S1 the expansion tank 1 creating a low pressure or vacuum forcing the pressure actuated two-way valve 9 to open and filling S2 the expansion tank with the liquid 5 during low pressure. When both fluid lines are empty, e.g. when the vehicle is new and is prepared for first use, the cooling lines need to be filled. To force the pressure actuated two-way valve 9 to open a low pressure can be applied to the first chamber 2 of the expansion tank 1. The cooling liquid may then be filled into both lines via the filling cap of the first chamber 2.

The person skilled in the art realizes that the present invention is not limited to the preferred embodiments described above. The person skilled in the art further realizes that modifications and variations are possible within the scope of the appended claims. For example, if a vehicle would need three cooling lines, e.g. for dual drive lines and a battery, the expansion tank could have three chambers and two pressure actuated two-way valves. Vehicles with more than two drive lines may also need three or more cooling lines. A person skilled in the art realizes that the disclosed expansion tank can be realized with any number of chambers within the scope of the appended claims.

Additionally, variations to the disclosed embodiments can be understood and effected by the skilled person in practicing the claimed invention, from a study of the drawings, the disclosure, and the appended claims.

## Claims

1. An expansion tank (1) for a vehicle with dual cooling lines (12, 13), comprising
a first chamber (2) with a first fluid pressure (P1), wherein the expansion tank (1) comprises a first fluid connector (3) in fluid connection with the first chamber (2) for connection to a first cooling line (12),
a second chamber (6) with a second fluid pressure (P2), wherein the expansion tank (1) comprises a second fluid connector (7) in fluid connection with the second chamber (2) for connection to a second cooling line (13),
wherein the first chamber (2) and the second chamber (6) are in fluid connection via a pressure actuated two-way valve (9) that acts as a one-way valve open in the direction towards the second chamber (6) at differential pressures between the second fluid pressure (P2) and the first fluid pressure (P1) below a first predetermined differential pressure threshold (DP1) and opens also in the direction towards the first chamber (2) at differential pressures above the first predetermined differential pressure threshold (PD1).

2. The expansion tank (1) according to claim 1, wherein the expansion tank (1) comprises an internal division wall (8) between the first chamber (2) and the second chamber (6), wherein the internal division wall (8) has a first side surface (81) and a second side surface (82) opposite the first side surface, wherein the first side surface delimits the first chamber and the second side surface delimits the second chamber.

3. The expansion tank (1) according to claim 2, wherein the internal division wall (8) comprises an opening (83) forming a fluid connection between the first chamber and the second chamber and wherein the pressure actuated two-way valve (9) is arranged in the opening.

4. The expansion tank (1) according to claim 1, wherein the first container (2) further comprises a filling cap (4) for filling the expansion tank (1) with fluid (5).

5. The expansion tank (1) according to claim 2, wherein the filling cap (4) further comprises a over pressure valve (41) opening towards the environment for releasing fluid at differential pressures between the first fluid pressure (P1) in the first container (2) and the ambient air pressure (AP) above a second predetermined differential pressure threshold pressure (DP2).

6. The expansion tank (1) according to any one of claim 1-3, wherein the first predetermined differential pressure threshold (DP1) is in the range of 0.2 bar to 3 bar. [Pressure above atmospheric pressure]

7. The expansion tank (1) according to any one of claim 1-3, wherein the first predetermined differential pressure threshold (DP1) is around 0.7 bar.

8. The expansion tank (1) according to any one of claims 3-5, wherein the second predetermined differential pressure threshold (DP2) is in the range of 0 bar to 1.5 bar.

9. The expansion tank (1) according to any one of claims 3-6, wherein the second predetermined differential pressure threshold (DP2) is around 0.75 bar.

10. The expansion tank (1) according to any one of the preceding claims, wherein the expansion tank (1) further comprises a third fluid connector (31) in fluid connection with the first chamber (2) for connection to the first cooling line (12), wherein the first fluid connector (3) and the third fluid connector (31) act as inlet and outlet, respectively, for cooling fluid, or the other way around.

11. The expansion tank (1) according to any one of the preceding claims, wherein expansion tank (1) further comprises a fourth fluid connector (71) in fluid connection with the second chamber (2) for connection to the second cooling line (12), wherein the second fluid connector (7) and the fourth fluid connector (71) act as inlet and outlet, respectively, for cooling fluid, or the other way around.

12. A coolant system (11) for electric circuits in a vehicle with an electric drive line comprising an expansion tank (1) according to any one of the preceding claims, further comprising:
a first cooling line (12) for cooling a battery (16) and a second cooling line (13) for cooling a motor (17, 18),
wherein the first cooling line (12) is connected to the first fluid connector (3) of the expansion tank (1) and the second cooling line (13) is connected to the second fluid connector (7) of the expansion tank (1).

13. The coolant system (11) according to claim 12, wherein the fluid that is filled into the expansion tank (1) is water with an optional anti-freezing component.

14. The coolant system (11) according to claim 12 or 13, wherein the motor (17, 18) is an Internal Combustion Engine (17) or an electric motor (18).

15. A method for filling the expansion tank (1) according to any one of claims 1-11 or the coolant system (11) according to any one of claims 12-14, the method comprising the steps of
evacuating (S1) the expansion tank (1) creating a low pressure or vacuum forcing the pressure actuated two-way valve (9) to open,
filling (S2) the expansion tank with the liquid (5) during low pressure.

## Patentansprüche

1. Ausdehnungsgefäß (1) für ein Fahrzeug mit doppelten Kühlleitungen (12, 13), umfassend
eine erste Kammer (2) mit einem ersten Fluiddruck (P1), wobei das Ausdehnungsgefäß (1) einen ersten Fluidverbinder (3) in Fluidverbindung mit der ersten Kammer (2) zum Verbinden mit einer ersten Kühlleitung (12) umfasst,
eine zweite Kammer (6) mit einem zweiten Fluiddruck (P2), wobei das Ausdehnungsgefäß (1) einen zweiten Fluidverbinder (7) in Fluidverbindung mit der zweiten Kammer (2) zum Verbinden mit einer zweiten Kühlleitung (13) umfasst,
wobei die erste Kammer (2) und die zweite Kammer (6) über ein druckbetätigtes Zweiwegeventil (9), das als ein in Richtung auf die zweite Kammer (6) bei Differenzdrücken zwischen dem zweiten Fluiddruck (P2) und dem ersten Fluiddruck (P1) unterhalb einer ersten vorbestimmten Differenzdruckschwelle (DP1) öffnendes Einwegeventil wirkt und auch in Richtung auf die erste Kammer (2) bei Differenzdrücken oberhalb der ersten vorbestimmten Differenzdruckschwelle (PD1) öffnet, in Fluidverbindung stehen.

2. Ausdehnungsgefäß (1) nach Anspruch 1, wobei das Ausdehnungsgefäß (1) eine innere Trennwand (8) zwischen der ersten Kammer (2) und der zweiten Kammer (6) umfasst, wobei die innere Trennwand (8) eine erste Seitenfläche (81) und eine der ersten Seitenfläche entgegengesetzte zweite Seitenfläche (82) aufweist, wobei die erste Seitenfläche die erste Kammer begrenzt und die zweite Seitenfläche die zweite Kammer begrenzt.

3. Ausdehnungsgefäß (1) nach Anspruch 2, wobei die innere Trennwand (8) eine Öffnung (83) umfasst, die zwischen der ersten Kammer und der zweiten Kammer eine Fluidverbindung bildet, und wobei das druckbetätigte Zweiwegeventil (9) in der Öffnung angeordnet ist.

4. Ausdehnungsgefäß (1) nach Anspruch 1, wobei der erste Behälter (2) ferner eine Füllkappe (4) zum Füllen des Ausdehnungsgefäßes (1) mit Fluid (5) umfasst.

5. Ausdehnungsgefäß (1) nach Anspruch 2, wobei die Füllkappe (4) ferner ein Überdruckventil (41) umfasst, das sich zur Umgebung hin öffnet, um Fluid bei Differenzdrücken zwischen dem ersten Fluiddruck (P1) in dem ersten Behälter (2) und dem Umgebungsluftdruck (AP) über einem zweiten vorbestimmten Differenzdruckschwellendruck (DP2) freizusetzen.

6. Ausdehnungsgefäß (1) nach einem der Ansprüche 1 bis 3, wobei die erste vorbestimmte Differenzdruckschwelle (DP1) im Bereich von 0,2 bar bis 3 bar liegt.
[Druck über Atmosphärendruck]

7. Ausdehnungsgefäß (1) nach einem der Ansprüche 1 bis 3, wobei die erste vorbestimmte Differenzdruckschwelle (DP1) etwa 0,7 bar beträgt.

8. Ausdehnungsgefäß (1) nach einem der Ansprüche 3 bis 5, wobei die zweite vorbestimmte Differenzdruckschwelle (DP2) im Bereich von 0 bar bis 1,5 bar liegt.

9. Ausdehnungsgefäß (1) nach einem der Ansprüche 3 bis 6, wobei die zweite vorbestimmte Differenzdruckschwelle (DP2) etwa 0,75 bar beträgt.

10. Ausdehnungsgefäß (1) nach einem der vorhergehenden Ansprüche, wobei das Ausdehnungsgefäß (1) ferner einen dritten Fluidverbinder (31) in Fluidverbindung mit der ersten Kammer (2) zum Verbinden mit der ersten Kühlleitung (12) umfasst, wobei der erste Fluidverbinder (3) und der dritte Fluidverbinder (31) als Einlass bzw. Auslass für Kühlfluid oder umgekehrt wirken.

11. Ausdehnungsgefäß (1) nach einem der vorhergehenden Ansprüche, wobei das Ausdehnungsgefäß (1) ferner einen vierten Fluidverbinder (71) in Fluidverbindung mit der zweiten Kammer (2) zum Verbinden mit der zweiten Kühlleitung (12) umfasst, wobei der zweite Fluidverbinder (7) und der vierte Fluidverbinder (71) als Einlass bzw. Auslass für Kühlfluid oder umgekehrt wirken.

12. Kühlmittelsystem (11) für elektrische Kreisläufe in einem Fahrzeug mit einem elektrischen Antriebsstrang, umfassend ein Ausdehnungsgefäß (1) nach einem der vorhergehenden Ansprüche, ferner umfassend:
eine erste Kühlleitung (12) zum Kühlen einer Batterie (16) und eine zweite Kühlleitung (13) zum Kühlen eines Motors (17, 18),
wobei die erste Kühlleitung (12) mit dem ersten Fluidverbinder (3) des Ausdehnungsgefäßes (1) verbunden ist und die zweite Kühlleitung (13) mit dem zweiten Fluidverbinder (7) des Ausdehnungsgefäßes (1) verbunden ist.

13. Kühlmittelsystem (11) nach Anspruch 12, wobei das in das Ausdehnungsgefäß (1) gefüllte Fluid Wasser mit einer optionalen Frostschutzkomponente ist.

14. Kühlmittelsystem (11) nach Anspruch 12 oder 13, wobei der Motor (17, 18) ein Verbrennungsmotor (17) oder ein Elektromotor (18) ist.

15. Verfahren zum Füllen des Ausdehnungsgefäßes (1) nach einem der Ansprüche 1 bis 11 oder des Kühlmittelsystems (11) nach einem der Ansprüche 12 bis 14, wobei das Verfahren die folgenden Schritte umfasst Evakuieren (S1) des Ausdehnungsgefäßes (1), wodurch ein niedriger Druck oder Vakuum erzeugt wird, wodurch das druckbetätigte Zweiwegeventil (9) zum Öffnen gezwungen wird,
Füllen (S2) des Ausdehnungsgefäßes mit der Flüssigkeit (5) bei niedrigem Druck.

## Revendications

1. Réservoir d'expansion (1) pour un véhicule à deux conduites de refroidissement (12, 13), comprenant
une première chambre (2) avec une première pression de fluide (P1), le réservoir d'expansion (1) comprenant un premier connecteur de fluide (3) en liaison fluidique avec la première chambre (2) pour le raccordement à une première conduite de refroidissement (12),
une deuxième chambre (6) avec une deuxième pression de fluide (P2), le réservoir d'expansion (1) comprenant un deuxième connecteur de fluide (7) en liaison fluidique avec la deuxième chambre (2) pour le raccordement à une deuxième conduite de refroidissement (13),
dans lequel la première chambre (2) et la deuxième chambre (6) sont en liaison fluidique par l'intermédiaire d'une soupape à deux voies actionnée par pression (9) qui agit comme une soupape unidirectionnelle ouverte dans la direction vers la deuxième chambre (6) à des pressions différentielles entre la deuxième pression de fluide (P2) et la première pression de fluide (P1) en dessous d'un premier seuil de pression différentielle prédéterminé (DP1) et s'ouvre également dans la direction vers la première chambre (2) à des pressions différentielles au-dessus du premier seuil de pression différentielle prédéterminé (PD1).

2. Réservoir d'expansion (1) selon la revendication 1, dans lequel le réservoir d'expansion (1) comprend une paroi de division intérieure (8) entre la première chambre (2) et la deuxième chambre (6), dans lequel la paroi de division intérieure (8) présente une première surface latérale (81) et une deuxième surface latérale (82) opposée à la première surface latérale, la première surface latérale délimitant la première chambre et la deuxième surface latérale délimitant la deuxième chambre.

3. Réservoir d'expansion (1) selon la revendication 2, dans lequel la paroi de division intérieure (8) comprend une ouverture (83) formant une liaison fluidique entre la première chambre et la deuxième chambre, et dans lequel la soupape à deux voies actionnée par pression (9) est disposée dans l'ouverture.

4. Réservoir d'expansion (1) selon la revendication 1, dans lequel le premier récipient (2) comprend en outre un bouchon de remplissage (4) pour remplir le réservoir d'expansion (1) avec du fluide (5).

5. Réservoir d'expansion (1) selon la revendication 2, dans lequel le bouchon de remplissage (4) comprend en outre une soupape de surpression (41) s'ouvrant vers l'environnement pour libérer du fluide à des pressions différentielles entre la première pression de fluide (P1) dans le premier récipient (2) et la pression de l'air ambiant (AP) au-dessus d'une deuxième pression de seuil de pression différentielle prédéterminée (DP2).

6. Réservoir d'expansion (1) selon l'une quelconque des revendications 1 à 3, dans lequel le premier seuil de pression différentielle prédéterminé (DP1) est dans la plage de 0,2 bar à 3 bars.
[Pression supérieure à la pression atmosphérique]

7. Réservoir d'expansion (1) selon l'une quelconque des revendications 1 à 3, dans lequel le premier seuil de pression différentielle prédéterminé (DP1) est d'environ 0,7 bar.

8. Réservoir d'expansion (1) selon l'une quelconque des revendications 3 à 5, dans lequel le deuxième seuil de pression différentielle prédéterminé (DP2) est dans la plage de 0 bar à 1,5 bars.

9. Réservoir d'expansion (1) selon l'une quelconque des revendications 3 à 6, dans lequel le deuxième seuil de pression différentielle prédéterminé (DP2) est d'environ 0,75 bar.

10. Réservoir d'expansion (1) selon l'une quelconque des revendications précédentes, dans lequel le réservoir d'expansion (1) comprend en outre un troisième connecteur de fluide (31) en liaison fluidique avec la première chambre (2) pour le raccordement à la première conduite de refroidissement (12), dans lequel le premier connecteur de fluide (3) et le troisième connecteur de fluide (31) agissent comme respectivement entrée et sortie pour le fluide de refroidissement, ou inversement.

11. Réservoir d'expansion (1) selon l'une quelconque des revendications précédentes, dans lequel le réservoir d'expansion (1) comprend en outre un quatrième connecteur de fluide (71) en liaison fluidique avec la deuxième chambre (2) pour le raccordement à la deuxième conduite de refroidissement (12), dans lequel le deuxième connecteur de fluide (7) et le quatrième connecteur de fluide (71) agissent comme respectivement entrée et sortie pour le fluide de refroidissement, ou inversement.

12. Système de refroidissement (11) pour des circuits électriques dans un véhicule avec une ligne de transmission électrique comprenant un réservoir d'expansion (1) selon l'une quelconque des revendications précédentes, comprenant en outre :
une première conduite de refroidissement (12) pour refroidir une batterie (16) et une deuxième conduite de refroidissement (13) pour refroidir un moteur (17, 18),
dans lequel la première conduite de refroidissement (12) est reliée au premier connecteur de fluide (3) du réservoir d'expansion (1) et la deuxième conduite de refroidissement (13) est reliée au deuxième connecteur de fluide (7) du réservoir d'expansion (1) .

13. Système de refroidissement (11) selon la revendication 12, dans lequel le fluide qui remplit le réservoir d'expansion (1) est de l'eau avec un composant antigel facultatif.

14. Système de refroidissement (11) selon la revendication 12 ou 13, dans lequel le moteur (17, 18) est un moteur à combustion interne (17) ou un moteur électrique (18).

15. Procédé de remplissage du réservoir d'expansion (1) selon l'une quelconque des revendications 1 à 11 ou du système de refroidissement (11) selon l'une quelconque des revendications 12 à 14, le procédé comprenant les étapes de
l'évacuation (S1) du réservoir d'expansion (1) créant une basse pression ou un vide forçant la soupape à deux voies actionnée par pression (9) à s'ouvrir, le remplissage (S2) du réservoir d'expansion avec le liquide (5) pendant une basse pression.
